# EUROPEAN PATENT SPECIFICATION

(11) **EP 4 594 185 B1**
(45) Date of publication and mention of the grant of the patent: **12.08.2026**
(21) Application number: 23777345.2
(22) Date of filing: 20.09.2023
(51) Int. Cl.: B64D 13/06

(54) **SYSTEM AND METHOD FOR SUPPLYING COOLED AIR IN A VEHICLE**
SYSTEM UND VERFAHREN ZUR BEREITSTELUNG VON GEKÜHLTER LUFT IN EINEM FAHRZEUG
SYSTÈME ET PROCÉDÉ D'ALIMENTATION EN AIR REFROIDI DANS UN VÉHICULE

(30) Priority: 28.09.2022 GB 202214172; 28.09.2022 EP 22275129
(43) Date of publication of application: 06.08.2025
(73) Proprietor: BAE SYSTEMS plc, London SW1Y 5AD (GB)
(72) Inventor: GREICIUNAS, Evaldas, Lancashire PR4 1AX (GB); SMITH, Andrew, James, Lancashire PR4 1AX (GB); SMITH, Stephen, John, Richard, Lancashire PR4 1AX (GB)
(74) Representative: BAE SYSTEMS plc Group IP Department
(86) International application number: PCT/GB2023/052432
(87) International publication number: WO 2024/069129

(56) References cited:
- KR-A- 20130 034 527
- US-A1- 2010 064 701
- US-A1- 2012 023 893
- US-A1- 2013 111 917

## Description

### FIELD

The present invention relates to systems for supplying cooled air in a vehicle, for example an aircraft. In particular, the present invention relates to systems comprising an air cycle machine, for example an electric air cycle machine (E-ACM).

### BACKGROUND

Vehicles commonly include air cooling systems that can be used to remove heat from certain parts or areas of the vehicle, as and when required. For example, air may be supplied to a driver or passenger compartment to help maintain the environment within a comfortable range of temperatures for any human occupants. Air cooling may similarly be used in other parts of the vehicle, for example to remove waste heat generated by electronic components, such as avionics components in an aircraft.

To increase the effectiveness of such systems, an air cycle machine (ACM) may be used to lower a temperature of the air before it is provided to the parts of the vehicle where cooling is required. An ACM operates by compressing air, passing the compressed air through a heat exchanger to remove excess heat generated by the compression, and then expanding the compressed air to reduce its temperature further. In this way, the ACM can provide a flow of cooled air. However, ACMs can struggle to provide sufficient cooling under peak loading conditions, particularly in situations where a high mass flow rate of low temperature air is required. It would therefore be desirable to provide an improved system for supplying cooled air in a vehicle.

KR 2013 0034527 A describes an air cooling system with an ACM and a phase change material (PCM) heat exchanger. A temperature controller measures the outlet temperature of the ACM turbine, and controls a regulating valve disposed between the turbine and the PCM heat exchanger, to regulate the temperature and the pressure of the fluid entering the PCM heat exchanger.

### SUMMARY

According to a first aspect of the present invention, there is provided a system for supplying cooled air in a vehicle, the system comprising: an air cycle machine, ACM, comprising an air compression stage arranged to receive and compress a flow of air so as to produce a flow of compressed air, a heat exchange stage arranged to cool said compressed air, and an air expansion stage arranged to expand air received from the heat exchange stage so as to output a flow of cooled air having a temperature lower than a temperature of the air received by the air compression stage; an airflow path configured to direct the cooled air from the ACM to one or more parts of the vehicle; and a phase change material, PCM, heat exchanger arranged to further cool the air prior to said air reaching at least one part of the vehicle among said one or more parts, in addition to cooling provided by the ACM.

Moreover, the system comprises a controller configured to control an extent to which the PCM heat exchanger further lowers the temperature of the cooled air in dependence on a load on the system.

In some embodiments according to the first aspect, the system comprises: a first bypass flow path configured to permit at least a portion of air flowing along the airflow path to bypass the PCM heat exchanger; and a flow control mechanism operable to control a flow rate of air along the first bypass flow path relative to a flow rate of air passing through the PCM heat exchanger, wherein the controller is configured to control the flow control mechanism in dependence on the load on the system, so as to control the extent to which the PCM heat exchanger further lowers the temperature of the cooled air prior to said air reaching the at least one part of the vehicle.

In some embodiments according to the first aspect, the controller is configured to receive first temperature information indicative of a first temperature of said air at a first point along the airflow path upstream of the at least one part of the vehicle, and second temperature information indicative of a second temperature of said air at a second point along the airflow path downstream of the at least one part of the vehicle, such that a difference between the first and second temperatures is indicative of a load on the system associated with the at least one part of the vehicle wherein the controller is configured to control the extent to which the PCM heat exchanger further lowers the temperature of the cooled air in dependence on the first temperature information and the second temperature information.

In some embodiments according to the first aspect, the one or more parts of the vehicle comprise at least a first part and a second part, the airflow path being configured such that the cooled air passes from the ACM to the second part via the first part, wherein the first point along the airflow path is a point upstream of the first part, the second point along the airflow path is a point downstream of the second part, the controller being configured to receive third temperature information indicative of a third temperature of said air at a third point along the airflow path between the first and second parts, such that a difference between the first and third temperatures is indicative of a load on the system associated with the first part of the vehicle and a difference between the second and third temperatures is indicative of a load on the system associated with the second part of the vehicle, wherein the controller is configured to control the extent to which the PCM heat exchanger further lowers the temperature of the cooled air in dependence on the third temperature information in addition to the first temperature information and the second temperature information.

In some embodiments according to the first aspect, the controller is configured to determine a first load associated with the first part of the vehicle based on the first and third temperature information, determine a second load associated with the second part of the vehicle based on the second and third temperature information, and determine the load on the system based on the determined first and second loads.

In some embodiments according to the first aspect, the one or more parts of the vehicle comprise at least a first part and a second part, the airflow path being configured such that the cooled air passes from the ACM to the second part via the first part, and the first point along the airflow path is a point upstream of the first part, such that a difference between the first and second temperatures is indicative of a total load on the system associated with both the first and second parts of the vehicle.

In some embodiments according to the first aspect, the one or more parts of the vehicle comprise one or more electronic components, the controller is configured to receive electrical power information indicative of a level of electrical power presently being supplied to the one or more electronic components, and is configured to control the extent to which the PCM heat exchanger further lowers the temperature of the cooled air in dependence on the received electrical power information.

In some embodiments according to the first aspect, the controller is configured to increase a rate of airflow through the PCM heat exchanger to cool a phase change material of the PCM heat exchanger.

In some embodiments according to the first aspect, the one or more parts of the vehicle comprise at least a first part and a second part, the airflow path being configured such that the cooled air passes from the ACM to the second part via the first part, wherein the PCM heat exchanger is disposed along the airflow path between the first part and the second part, so as to cool air received from the first part before it reaches the second part.

In some embodiments according to the first aspect, the PCM heat exchanger is disposed along the airflow path between the ACM and the one or more parts of the vehicle, so as to further cool the flow of cooled air from the ACM before it reaches the one or more parts.

In some embodiments according to the first aspect, the PCM heat exchanger is connected between the air compression stage of the ACM and the air expansion stage of the ACM so as to further cool the flow of compressed air before it reaches the air expansion stage.

In some embodiments according to the first aspect, the one or more parts of the vehicle comprise at least a first part and a second part, the airflow path being configured such that the cooled air passes from the ACM to the second part via the first part, the PCM heat exchanger comprising: a first PCM heat exchanger disposed along the airflow path between the first part and the second part, so as to cool air received from the first part before it reaches the second part; or a second PCM heat exchanger disposed along the airflow path between the ACM and the first part, so as to further cool the flow of cooled air from the ACM before it reaches the first part; or a third PCM heat exchanger connected between the air compression stage of the ACM and the air expansion stage of the ACM so as to further cool the flow of compressed air before it reaches the air expansion stage, wherein the system further comprises at least one other of said first, second and third heat exchangers.

In some embodiments according to the first aspect, the one or more parts of the vehicle comprise at least a first part and a second part, the airflow path being configured such that the cooled air passes from the ACM to the second part via the first part, the system comprising: a second bypass flow path configured to permit at least a portion of the cooled air from the ACM to bypass the first part, such that the at least a portion of cooled air can flow from the ACM to the second part without passing through the first part.

In some embodiments according to the first aspect, the airflow path is a recirculation airflow path configured to direct air from the one or more parts of the vehicle back to the air compression stage of the ACM, so as to recirculate air within the vehicle.

In some embodiments according to the first aspect, the air cycle machine is an electric air cycle machine, E-ACM.

In some embodiments according to the first aspect, the E-ACM is a closed-loop E-ACM.

According to a second aspect of the present invention, there is provided a vehicle comprising the system according to the first aspect.

In some embodiments according to the second aspect, the vehicle is an aircraft.

In some embodiments according to the second aspect, the one or more parts of the vehicle comprise at least: a cockpit; and one or more avionics compartments housing one or more avionics components.

In some embodiments according to the second aspect, the first part of the vehicle comprises the cockpit and the second part of the vehicle comprises the one or more avionics compartments.

According to a third aspect of the present invention, there is provided a method of supplying cooled air in a vehicle, the method comprising: using an air cycle machine, ACM, to produce a flow of cooled air, the ACM comprising an air compression stage arranged to compress air so as to produce a flow of compressed air, a heat exchange stage arranged to cool said compressed air, and an air expansion stage arranged to expand air received from the heat exchange stage so as to output the flow of cooled air having a temperature lower than a temperature of the air received by the air compression stage; directing the cooled air from the air expansion stage of the ACM around an airflow path from the ACM to one or more parts of the vehicle; using a phase change material, PCM, heat exchanger to further cool the air prior to said air reaching at least one part of the vehicle among said one or more parts, in addition to cooling provided by the ACM; and using a controller to control an extent to which the PCM heat exchanger further lowers the temperature of the cooled air in dependence on a load on the system.

### BRIEF DESCRIPTION OF THE FIGURES

Embodiments of the invention will now be described by way of example only with reference to the figures, in which:
Figure 1 shows a system for supplying cooled air in a vehicle according to an embodiment of the invention, the system comprising a phase change material (PCM) heat exchanger arranged to cool a flow of air passing from a cockpit to an avionics compartment;
Figure 2 shows a system for supplying cooled air in a vehicle according to an embodiment of the invention, the system comprising a PCM heat exchanger arranged to cool a flow of air passing from an electric air cycle machine (E-ACM) to a cockpit;
Figure 3 shows a system for supplying cooled air in a vehicle according to an embodiment of the invention, the system comprising a PCM heat exchanger arranged to cool a flow of air passing from a compressor to a turbine of an E-ACM;
Figure 4 shows a system for supplying cooled air in a vehicle according to an embodiment of the invention, the system comprising a plurality of PCM heat exchangers;
Figure 5 shows a system comprising a mechanism for controlling an extent of cooling provided by a phase change material heat exchanger, according to an embodiment of the invention;
Figure 6 is a flowchart showing a method of supplying cooled air in a vehicle, according to an embodiment of the invention; and
Figure 7 is a cross-sectional view of a PCM heat exchanger, according to an embodiment of the invention.

### DETAILED DESCRIPTION

According to embodiments of the invention, systems and methods are provided for supplying cooled air in a vehicle. Such systems and methods may involve using an air cycle machine (ACM) to compress, cool and expand a flow of air so as to provide a flow of cooled air that can be used to cool parts of the vehicle. In the following detailed description, embodiments of the invention will be described in relation to systems for providing cooled air in an aircraft, in which the cooled air is used to provide cooling to parts of the aircraft including the cockpit and avionics components. The aircraft may, for example, be a fixed-wing aircraft, rotorcraft or airship.

However, as will become apparent from the following description, the principles disclosed herein are not limited to systems for cooling a cockpit or avionics components. Hence, in some embodiments of the invention, systems such as those described below with reference to the drawings may be used to cool other parts of an aircraft other than the cockpit and avionics components.

Furthermore, embodiments of the invention are not limited to use in aircraft, and as such may be used to cool parts of vehicles other than aircraft. In some embodiments of the invention, systems and methods similar to those described below may be used to provide cooled air in other types of vehicles than aircraft, for example land-going vehicles such as trains, cars, lorries, buses, armoured vehicles, and so on, or sea-going vehicles such as ships, boats, and submersibles. Similarly, whilst embodiments of the invention are described below in relation to closed-loop systems comprising a closed-loop electric air cycle machine (E-ACM), the principles disclosed herein may also be applied to open-loop systems and to other types of ACM than electric ACMs. Accordingly, the following description should be read in this context.

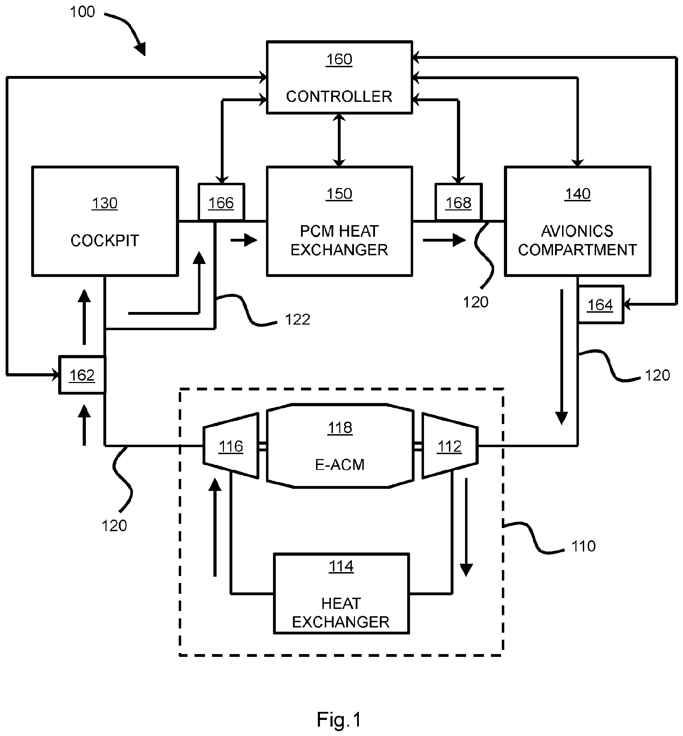

Referring now to Fig. 1, a system 100 for supplying cooled air in a vehicle is illustrated according to an embodiment of the invention. The system 100 comprises an ACM 110, an airflow path 120, a phase change material (PCM) heat exchanger 150, and a controller 160. The ACM 110 is configured to supply a flow of cooled air, meaning air that is at a lower temperature than the temperature of air on an inlet side of the ACM 110, prior to compression in the ACM 110.

In the present embodiment, the ACM 110 is an E-ACM comprising an air compression stage 112 in the form of a compressor arranged to receive and compress a flow of air so as to produce a flow of compressed air, a heat exchange stage 114 arranged to cool said compressed air, and an air expansion stage 116 in the form of a turbine arranged to expand air received from the heat exchange stage 114 so as to output the flow of cooled air. Any suitable form of compression may be used in the air compression stage 112 of the ACM 110, including single-state compression or multi-stage compression. For example, the air compression stage 112 may comprise one or more axial or radial compressors.

In the air expansion stage of the present embodiment, the turbine 116 may also assist in forcing the cooled air around the airflow path 120. In some embodiments, instead of a turbine the air expansion stage 116 may simply comprise an expansion chamber into which compressed air is fed from the heat exchange stage 114, allowing the compressed air to expand and cool. In such embodiments, in the absence of a turbine an alternative mechanism may be provided to cause the cooled air to flow around the airflow path. For example, one or more fans may be disposed around the airflow path 120 to push or pull air along the airflow path 120.

The E-ACM 110 comprises one or more electric motors 118 configured to rotate the compressor 112 and turbine 116, so as to respectively compress and expand the flow of air. However, as explained above, in other embodiments of the invention a different form of ACM may be used other than an E-ACM. Accordingly, in some embodiments the E-ACM 110 shown in Fig. 1 may be replaced by another type of ACM using a different power source to drive the air compression stage 112 and/or the air expansion stage 116, in which case the one or more electric motors 118 may be omitted. For example, in some embodiments the air compression stage 112 and/or the air expansion stage 116 may be powered by bleed air instead of using one or more electric motors 118, for instance by feeding bleed air into a second turbine connected to a shaft of the compressor 112 to cause the compressor 112 to rotate. In this context, "bleed air" refers to a separate flow of compressed air taken from a compressor of a gas turbine, for example a gas turbine in a jet engine of the aircraft.

As shown in Fig. 1, the airflow path 120 is configured to direct air from the turbine 116 of the E-ACM 110 to a first part 130 of the vehicle, and thereafter to a second part of the vehicle 140. In the present embodiment the vehicle is an aircraft, the first part 130 is a cockpit, and the second part 140 is one or more avionics compartments. The term "avionics" may refer broadly to any electronic components installed in the aircraft.

In the present embodiment, the airflow path 120 is configured to direct air from the one or more parts of the vehicle, in this case the cockpit 130 and avionics compartment 140, back to the air compression stage 112 of the E-ACM 110, so as to recirculate air within the vehicle. The airflow path 120 of the present embodiment may therefore be referred to as a recirculation airflow path. Similarly, the system 100 may be referred to as a closed-loop system, and the E-ACM 110 may be referred to as a closed-loop E-ACM.

In other embodiments, the airflow path may not direct air from the one or more parts of the vehicle back to the air compression stage of the ACM. Instead, the air compression stage of the ACM may draw in air from a different source, for example from outside the vehicle. Similarly, warm air that has passed through the one or more parts of the vehicle may be exhausted outside of the vehicle, rather than being captured and fed back into the ACM. Such systems may be referred to as open-loop systems, and in such systems the ACM may be referred to as an open-loop ACM.

One drawback of ACM-based cooling systems is that the ACM can struggle to efficiently provide sufficient cooling under peak loading conditions, particularly in situations where a high mass flow rate of low temperature air is required. For example, when the vehicle is a high-performance aircraft capable of performing advanced manoeuvres at high velocities, such as a fighter jet, the thermal load on parts of the vehicle may vary significantly from one moment to the next depending on the aircraft's movements. Purely by way of an example, if the aircraft accelerates quickly to supersonic speeds, the thermal load on the cockpit may increase significantly due to frictional heating of the cockpit glass canopy. At other times, the thermal load on the cockpit may be much lower.

To increase the maximum mass flow rate that can be achieved, one potential solution could be to modify the ACM to increase the maximum achievable throughput of the air compression stage and air expansion stage, for example by using a larger compressor and turbine, which in turn may necessitate changes to the heat exchanger to increase its cooling capacity. However, a drawback of this approach would be the increased size, mass, cost and complexity of the ACM.

Embodiments of the present invention therefore adopt a different approach to allow the system 100 to continue to provide a high mass flow rate of low temperature air even under peak loading conditions, by using a phase change material (PCM) heat exchanger to further cool the air prior to it reaching part of the vehicle, in addition to cooling provided by the ACM. The PCM heat exchanger 150 comprises a phase change material that is capable of absorbing heat from air flowing along the airflow path 120. Specifically, the phase change material is a material that absorbs heat in the process of changing from one phase of matter to another, for example from a solid to a liquid or from a liquid to a gas. One example of a phase change material that may be used in a PCM heat exchanger according to embodiments of the present invention is paraffin wax. However, embodiments of the invention are not limited to paraffin wax-based PCM heat exchangers, and in other embodiments the PCM heat exchanger may use a different phase change material. For example, in some embodiments the PCM heat exchanger the phase change material may comprise one or more of a salt, an organic solution, a hydrated salt, or any other suitable material.

In the case of a phase change material that transitions from a solid to a liquid, the material absorbs an amount of energy that is at least equal to the latent heat of fusion. In the case of a phase change material that transitions from a liquid to a gas, the material absorbs an amount of energy that is at least equal to the latent heat of vaporisation. The phase change material may also absorb additional thermal energy due to heating of the material before or after the phase change occurs, in which case the amount of additional energy absorbed will be equal to the specific heat capacity of the material multiplied by its mass in kilograms and the temperature increase in degrees Celsius (delta T). In some embodiments, the phase change material may be selected so as to undergo both transitions in the PCM heat exchanger 150, i.e. solid to liquid followed by liquid to gas, across a range of temperatures that are expected to be experienced by the PCM heat exchanger 150 under typical operating conditions for the vehicle in which the system is installed. This can increase the total amount of energy that can be absorbed by the phase change material.

Once some or all of the phase change material has absorbed energy from the air flowing along the airflow path 120 and has undergone the phase change, at a later point time the phase change material can release the absorbed thermal energy to an outside environment, thereby cooling the phase change material and returning it to its original state. In this way, the phase change material in the PCM heat exchanger 150 can temporarily increase the cooling capacity of the system 100 when required under peak loading conditions. In other words, the system 100 comprising the PCM heat exchanger 150 is able to absorb more thermal energy from parts of the vehicle, for example the cockpit 130 and avionics compartment 140 of an aircraft in the present embodiment, compared to a similar system comprising only the E-ACM 110 without the PCM heat exchanger 150.

The PCM heat exchanger 150 in the present embodiment is a closed system, meaning that the PCM heat exchanger 150 contains a fixed amount of phase change material that is sealed within the PCM heat exchanger 150. In another embodiment, the PCM heat exchanger 150 could be designed to operate as an open system, meaning that some or all of the phase change material is permitted to escape the PCM heat exchanger 150 during operation of the system 100. Consequently, since the amount of phase change material within the PCM heat exchanger 150 will decrease over time, the PCM heat exchanger 150 may be configured to enable the phase change material to be periodically replenished as and when needed, for example by opening up a housing of the PCM heat exchanger 150 to fill the PCM heat exchanger 150 with more phase change material.

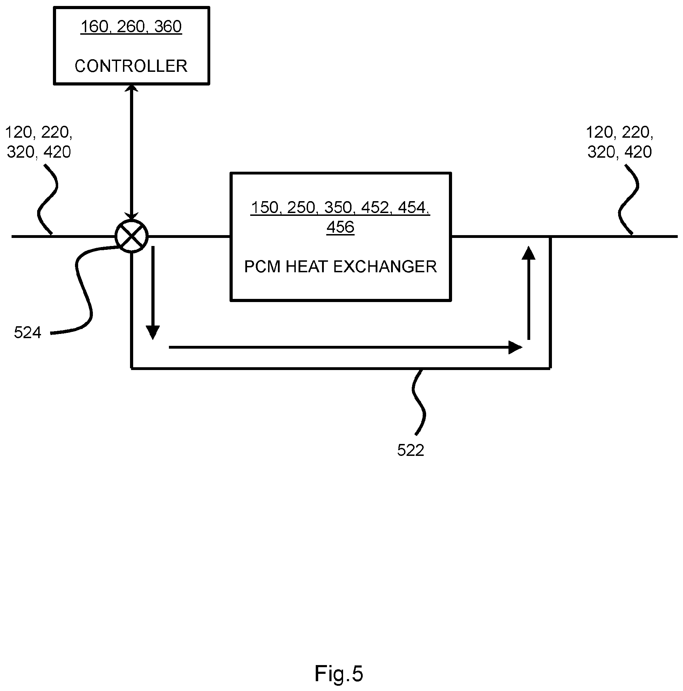

According to the claimed invention, the system comprises a controller 160 configured to control the extent to which the PCM heat exchanger 150 further lowers the temperature of the cooled air in dependence on a load on the system. In other words, the controller 160 can control the rate at which heat energy from air flowing along the airflow path 120 is absorbed in the PCM heat exchanger 150. This control function of the controller 160 may be implemented via any suitable mechanism, one example of which is described later with reference to Fig. 5.

One advantage of actively controlling the rate at which the PCM heat exchanger 150 absorbs heat energy is that the PCM heat exchanger 150 may be used to absorb excess energy only under peak loading conditions. In this way, the controller 160 can ensure that the phase change material remains relatively cool at other times, and is therefore able to absorb a greater amount of energy when peak loading conditions occur.

To this end, the controller 160 may be configured to monitor one or more variable parameters that are indicative of the present load on the system 100, and control the extent to which the PCM heat exchanger 150 further lowers the temperature of the cooled air in dependence on the monitored one or more parameters. In the present embodiment the system 100 comprises first, second, third and fourth temperature sensors 162, 164, 166, 168, and the controller 160 is configured to respectively receive first, second, third and fourth temperature information indicative of the temperatures measured by the first, second, third and fourth temperature sensors 162, 164, 166, 168. As will now be described, the controller can use this information to decide when and how to adjust the rate at which heat energy is absorbed by the PCM heat exchanger 150. As will become apparent from the following description, in some embodiments one or more of the first, second, third and fourth temperature sensors 162, 164, 166, 168 may be omitted. Furthermore, in some embodiments the controller 160 may not receive any such temperature information, in which case the system 100 may not comprise any temperature sensors.

Continuing with reference to Fig. 1, in the present embodiment the first temperature sensor 162 is configured to measure a temperature at a first point along the airflow path 120 upstream of the parts of the vehicle that are cooled using the flow of cooled air supplied by the E-ACM 110, which in the present embodiment include the cockpit 130 and the one or more avionics compartments 140. The controller 160 receives first temperature information from the first temperature sensor 162, which is indicative of the temperature measured at the first point.

The second temperature sensor 164 is configured to measure a temperature at a second point along the airflow path 120 downstream of the parts of the vehicle that are cooled using the flow of cooled air supplied by the E-ACM 110, which in the present embodiment include the cockpit 130 and the one or more avionics compartments 140. The controller 160 receives second temperature information from the second temperature sensor 164, which is indicative of the temperature measured at the second point.

The third temperature sensor 166 is configured to measure a temperature at a third point along the airflow path 120, and the fourth temperature sensor 168 is configured to measure a temperature at a fourth point along the airflow path 120. The third and fourth points are both upstream of the one or more avionics compartments 140 and downstream of the cockpit 130. The third point is a point between the cockpit 130 and the PCM heat exchanger 150, in other words a point upstream of the PCM heat exchanger 150. The fourth point is a point between the PCM heat exchanger 150 and the one or more avionics compartments 140, in other words a point downstream of the PCM heat exchanger 150.

The controller 160 receives third temperature information from the third temperature sensor 166, which is indicative of the temperature measured at the third point. The controller 160 also receives fourth temperature information from the fourth temperature sensor 166, which is indicative of the temperature measured at the fourth point.

The controller 160 can use the first, second, third and fourth temperature information to calculate temperature differences, or 'deltas', across various parts of the system 100, so as to control the rate at which heat energy is absorbed by the PCM heat exchanger 150 in dependence on the calculated temperature differences. The temperature difference across part of the system 100, for example part of the vehicle such as the cockpit 130 or avionics compartment 140, or part of the cooling system such as the PCM heat exchanger 150, is indicative of a load on the system associated with that part of the system.

In some embodiments, the controller 160 may control the extent to which energy is absorbed by the PCM heat exchanger 150 in dependence on a difference between the first and second temperatures, which is indicative of a total load on the system associated with both the cockpit 130 and the one or more avionics compartments 140. For example, the controller 160 may use the first and second temperature information to detect when a temperature difference across the cockpit 130, PCM heat exchanger 150 and one or more avionics compartments 140 exceeds a first threshold, and respond by increasing the rate at which energy is absorbed by the PCM heat exchanger 150. The first threshold may be set to a value of the temperature difference that would be expected to occur under a certain loading condition, for example, a peak loading condition that the vehicle may be expected to experience during normal operation.

In some embodiments, the controller 160 may use temperature measurements, such as the first, second, third and/or fourth temperature information, to decide when to increase a flow of air through the PCM heat exchanger 150 in order to cool the phase change material. This process may be referred to as "charging" the PCM heat exchanger 150, and occurs when the phase change material is at a higher temperature than the temperature of air flowing through the PCM heat exchanger 150. For example, in a scenario in which the phase change material in the PCM heat exchanger 150 has previously been used to absorb heat from air flowing around the airflow path 120, thereby providing additional cooling, some or all of the phase change material may have changed state (e.g. from solid to liquid) and consequently not be able to efficiently absorb more heat. By cooling the phase change material to return it to the original state, e.g. from liquid to solid, the controller 160 can prepare the PCM heating exchanger 150 so that it can more effectively cool the air the next time that additional cooling is required (e.g. during a subsequent peak loading event). In some such embodiments, the PCM heat exchanger 150 may include a sensor arranged to provide PCM temperature information indicative of a current temperature of the phase change material, and the controller 160 may decide to increase the rate of airflow through the PCM heat exchanger 150 on the basis of the PCM temperature information. For example, the controller 160 may compare the PCM temperature information to the third temperature information to determine whether the temperature of air exiting the cockpit 130 is lower than the current temperature of the phase change material, and may increase the rate of airflow through the PCM heat exchanger 150 in dependence on a determination that the temperature of air exiting the cockpit 130 is lower than the current temperature of the phase change material.

In the present embodiment, the system is configured to supply cooled air to a plurality of parts of a vehicle, specifically a first part (the cockpit 130) and a second part (the one or more avionics compartments 140). In such embodiments, the controller 160 may be configured to receive the third and/or fourth temperature information in addition to the first and/or second temperature information, to allow the controller 160 to calculate individual temperature differences across each of the parts 130, 140 to which cooled air is supplied. In some such embodiments one of the third and fourth temperature sensors 166, 168 may be omitted, on the basis that when the PCM heat exchanger 150 is absorbing little or no energy, the temperature at the third point may be very close to, or even identical to, the temperature measured at the fourth point. However, measuring temperatures separately at both the third and fourth points has the advantage that when the PCM heat exchanger 150 is absorbing energy from the air flowing along the airflow path 120, so as to produce a measureable temperature difference across the PCM heat exchanger 150, the controller 160 can still determine accurate temperature deltas across each of the cockpit 130 and one or more avionics compartments 140.

The controller 160 may utilise received temperature information, such as the first, second, third and fourth temperature information, in various ways. As an example, in some embodiments the controller 160 may use the received temperature information to calculate one or more temperature differences, or deltas, across parts of the system as described above, and adjust the rate at which heat is absorbed by the PCM-HE in dependence on the measured temperature difference(s). In some embodiments, the controller 160 is configured to determine a first load associated with the first part of the vehicle (e.g. the cockpit 130) based on the first and third temperature information, determine a second load associated with the second part of the vehicle (e.g. the one or more avionics compartments 140) based on the second and third temperature information, and determine the load on the system based on the determined first and second loads.

In another embodiment, the temperature information may be used as inputs to a predefined control algorithm, for example an artificial intelligence (AI) algorithm trained to map a plurality of input temperature measurements onto one or more outputs for use in controlling a mechanism that adjusts the rate at which energy is absorbed by the PCM heat exchanger 150. In this approach, the received temperature information can be used by the controller 160 without explicitly calculating temperature deltas. As a further example, in some embodiments one or more temperature measurements may be compared to corresponding setpoint values and used as inputs to a suitable control algorithm, for example a proportional-integral-derivative (PID) algorithm.

Embodiments of the invention have been described above with reference to Fig. 1 in which a controller 160 actively controls the extent of cooling provided by the PCM heat exchanger 150 in dependence on received temperature information. In some embodiments, the controller 160 may take into account other information, instead of or in addition to temperature information, when controlling the extent of cooling provided by the PCM heat exchanger 150. For example, in one such embodiment the controller 160 is configured to receive electrical power information indicative of a level of electrical power presently being supplied to one or more electronic components of the vehicle, such as the avionics components housed in the one or more avionics compartments 140. For example, as shown in Fig. 1 the controller 160 may be communicatively linked to a power system of the one or more avionics compartments 140 so as to receive the electrical power information. The controller 160 may then control the extent to which the PCM heat exchanger 160 further lowers the temperature of the cooled air in dependence on the received electrical power information, for example, by increasing the rate at which the PCM heat exchanger 160 absorbs energy from the cooled air in response to an increase in the level of electrical power being supplied to the one or more electronic components, as indicated by the electrical power information.

Embodiments of the invention have been described above with reference to Fig. 1 in which a controller 160 actively controls the extent of cooling provided by the PCM heat exchanger 150, or in other words, the rate at which energy is absorbed by the PCM heat exchanger 150. However, in other embodiments of the invention, the system may be configured such that the PCM heat exchanger operates passively, meaning that the phase change material naturally absorbs heat from air flowing through the PCM heat exchanger without any mechanism for controlling the rate at which heat is absorbed by the phase change material.

In the embodiment shown in Fig. 1, the airflow path 120 is configured such that the cooled air passes from the E-ACM 110 to a second part of the vehicle, in this case the one or more avionics compartments 140, via a first part of the vehicle, in this case the cockpit 130, and the PCM heat exchanger 150 is disposed along the airflow path 120 between the first part 130 and the second part 140. In this way, the PCM heat exchanger 150 cools air received from the first part 130 before it reaches the second part 140. This arrangement may be particularly advantageous when there is a requirement for cooling air entering the second part 140 not to exceed a second threshold temperature. That is, if the load on the first part 130 of the vehicle increases significantly, causing air leaving the first part 130 to exceed the second threshold, the additional cooling provided by the PCM heat exchanger 150 can bring the temperature of air on the airflow path 120 back down below the second threshold before it reaches the second part 140 of the vehicle.

In the present embodiment, the system 100 further comprises a cockpit bypass flow path 122 configured to permit at least a portion of the cooled air from the E-ACM 110 to bypass the cockpit 130. In this way, at least a portion of cooled air can flow from the E-ACM 110 to the one or more avionics compartments 140 without passing through the cockpit 130. As shown in Fig. 1, air travelling along the cockpit bypass flow path 122 is mixed with air exiting the cockpit 130 before continuing onwards through the PCM heat exchanger 150 and then to the one or more avionics compartments 140. This can provide an additional mechanism to help keep the temperature of air that is supplied to the one or more avionics compartments 140 below the second threshold. In some embodiments, the cockpit bypass flow path 122 may be omitted, such that all air travelling along the airflow path 120 must pass through the cockpit 130.

Depending on the embodiment, the system 100 may comprise a mechanism for adjusting the relative flow rates of air through the cockpit 130 and through the cockpit bypass flow path 122, or the relative flow rates may be fixed (i.e. non-adjustable). In embodiments in which a mechanism for adjusting the relative flow rates is provided, the controller 160 may control the mechanism so as to maintain the temperature of air at the fourth point below the second threshold, by increasing or decreasing the rate of flow through the cockpit bypass flow path 122 as necessary.

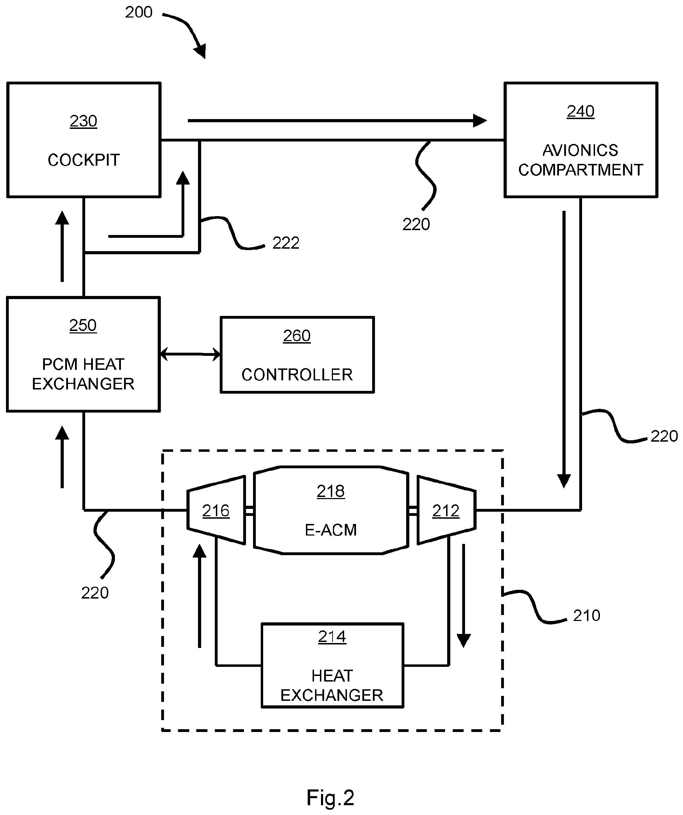

In general, in embodiments of the present invention a PCM heat exchanger may be used in any system in which cooled air from an ACM is supplied to one or more parts of a vehicle, so as to provide additional cooling capacity in addition to the cooling that is provided by the ACM. In the embodiment shown in Fig. 1, the PCM heat exchanger 150 is disposed between the cockpit 130 and the one or more avionics compartments 140 to provide further cooling to the flow of cooled air after it has passed through the cockpit 130, and before it passes through the one or more avionics compartments 140. However, in other embodiments the PCM heat exchanger 150 may be disposed at a different point in the system, in such a way that the PCM heat exchanger 150 still has the effect of providing further cooling in addition to the cooling provided by the ACM. Examples of other such embodiments are shown in Figs. 2, 3 and 4.

Like the system 100 of Fig. 1, the systems 200, 300, 400 shown in Figs. 2, 3 and 4 each comprise an E-ACM 210, 310, 410, an airflow path 220, 320, 420 configured to supply cooled air from the E-ACM 210, 310, 410 to one or more avionics compartments 240, 340, 440 via the cockpit 230, 330, 430, a PCM heat exchanger 250, 350, 452, 454, 456 configured to provide further cooling in addition to the cooling provided by the E-ACM 210, 310, 410, and a controller 260, 360 configured to adjust the rate at which energy is absorbed by the PCM heat exchanger 250, 350, 452, 454, 456. The E-ACMs 210, 310, 410 each comprise an air compression stage 212, 312, 412, heat exchange stage 214, 314, 414, air expansion stage 216, 316, 416 and an electric motor 218, 318, 418. The systems 200, 300, 400 each also comprise a cockpit bypass flow path 222, 322, 422 configured to permit at least a portion of the cooled air from the E-ACM 210, 310, 410 to bypass the cockpit 230, 330, 430.

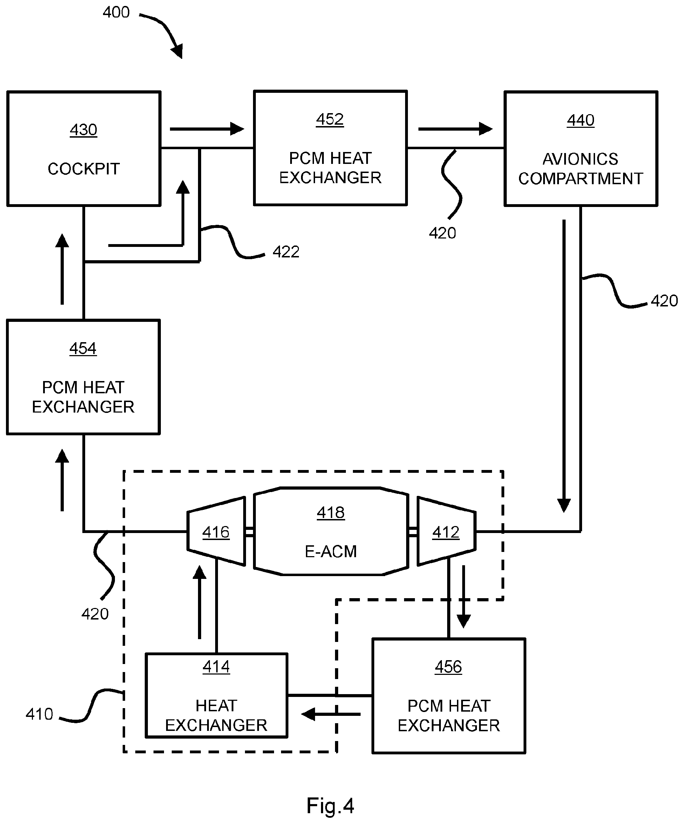

The function of each of these parts in the systems 200, 300, 400 is similar to that of the corresponding parts in the system 100 of Fig. 1, and for the sake of brevity a detailed description will not be repeated here. It will be appreciated that the system shown in Fig. 4 also comprises a controller similar to the controller 160 described above with reference to Fig. 1, although for clarity the controller is not illustrated in Fig. 4.

The system 200 of Fig. 2 differs from the system 100 of Fig. 1 in that the PCM heat exchanger 250 is arranged to cool a flow of air passing from the E-ACM 210 to the cockpit 230. In other words, the PCM heat exchanger 250 is disposed upstream of the cockpit 230 along the airflow path 220. The advantage of this arrangement is that the temperature of air supplied to the cockpit 230 may be further reduced, which may be particularly advantageous when the vehicle is operating in high ambient temperatures.

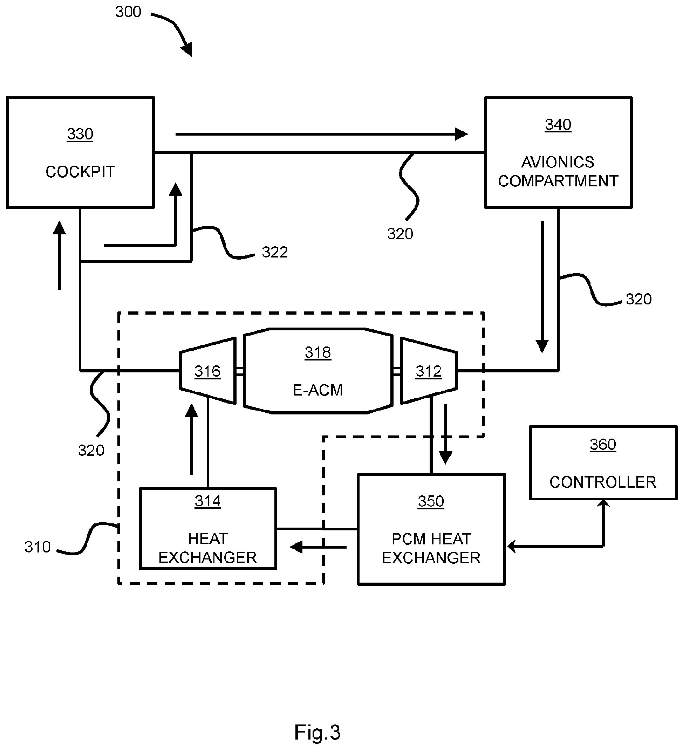

The system 300 of Fig. 3 differs from the system 100 of Fig. 1 in that the PCM heat exchanger 350 is connected between the air compression stage 312 of the E-ACM 310 and the air expansion stage 316 of the E-ACM 310 so as to further cool the flow of compressed air before it reaches the air expansion stage 316. Depending on the embodiment, the PCM heat exchanger 350 may be connected upstream of the heat exchange stage 314 of the E-ACM 310, or may be connected downstream of the heat exchange stage 314 of the E-ACM 310. In effect, in this arrangement the PCM heat exchanger 350 acts to assist the heat exchange stage 314 of the E-ACM 310. The PCM heat exchanger 350 therefore helps to further reduce the temperature of the compressed air that is fed to the air expansion stage 316 of the E-ACM 310, and consequently further reduces the temperature of the flow of cooled air that exits the air expansion stage 316.

The system 400 of Fig. 4 differs from the system 100 of Fig. 1 in that the system 400 comprises a first, second and third PCM heat exchangers 452, 454, 456. The first PCM heat exchanger 452 is disposed in a similar location to that shown in Fig. 1, and functions in a similar manner to the PCM heat exchanger 150 of Fig. 1. The second PCM heat exchanger 454 is disposed in a similar location to that shown in Fig. 2, and functions in a similar manner to the PCM heat exchanger 250 of Fig. 2. The third PCM heat exchanger 456 is disposed in a similar location to that shown in Fig. 3, and functions in a similar manner to the PCM heat exchanger 350 of Fig. 3. In some embodiments similar to the one shown in Fig. 4, one of the first, second and third PCM heat exchangers 452, 454, 456 may be omitted such that the system only comprises two PCM heat exchangers. In other embodiments, more than three PCM heat exchangers may be provided in a single system, for example by connecting additional PCM heat exchangers in series or parallel with any of the first, second and third PCM heat exchangers 452, 454, 456 shown in Fig. 4.

Referring now to Fig. 5, a system comprising a mechanism for controlling an extent of cooling provided by a PCM heat exchanger is illustrated, according to an embodiment of the invention. As shown by the reference numerals in Fig. 5, the mechanism may be used to control the extent of cooling provided by any of the PCM heat exchangers 150, 250, 350, 452, 454, 456 of the systems 100, 200, 300, 400 described above with reference to Figs. 1 to 4, and may be controlled by the respective controllers 160, 260, 360.

The system comprises a PCM heat exchanger bypass flow path 522 configured to permit at least a portion of air flowing along the airflow path 120, 220, 320, 420 to bypass the PCM heat exchanger 150, 250, 350, 452, 454, 456. The system further comprises a flow control mechanism 524, for example a valve, that is operable to control a flow rate of air along the PCM heat exchanger bypass flow path 522 relative to a flow rate of air passing through the PCM heat exchanger 150, 250, 350, 452, 454, 456. The controller 160, 260, 360 is configured to control the flow control mechanism 524 in dependence on the load on the system, for example by opening or closing the valve, so as to control the extent to which the PCM heat exchanger 150, 250, 350, 452, 454, 456 further lowers the temperature of the cooled air flowing along the airflow path 120, 220, 320, 420. In addition to enabling the controller 160, 260, 360 to dynamically adjust the extent of cooling provided by the PCM heat exchanger 150, 250, 350, 452, 454, 456, the combination of a PCM heat exchanger bypass flow path 522 and flow control mechanism 524 can allow airflow along the airflow path 120, 220, 320, 420 to bypass the PCM heat exchanger 150, 250, 350, 452, 454, 456 when additional cooling is not required, thereby avoiding a pressure drop that may otherwise occur when the airflow is directed through the PCM heat exchanger 150, 250, 350, 452, 454, 456.

In the embodiment of Fig. 5, the mechanism for controlling an extent of cooling provided by a PCM heat exchanger comprises the PCM heat exchanger bypass flow path 522 in combination with the flow control mechanism 524. In other embodiments, a different mechanism may be provided for controlling the extent of cooling provided by the PCM heat exchanger. For example, in some embodiments the mechanism may be configured to physically move the PCM heat exchanger into or out of the airflow path. For example, in one such embodiment the mechanism may be configured to rotate, slide or otherwise move the PCM heat exchanger out of the airflow path when it is not required. Depending on the implementation, if necessary the mechanism may further be configured to replace the PCM heat exchanger with a suitable length of ducting or similar component, to bridge a gap in the airflow path where the PCM heat exchanger was previously located. The mechanism could then be controlled to move the PCM heat exchanger back into the airflow path when additional cooling is required.

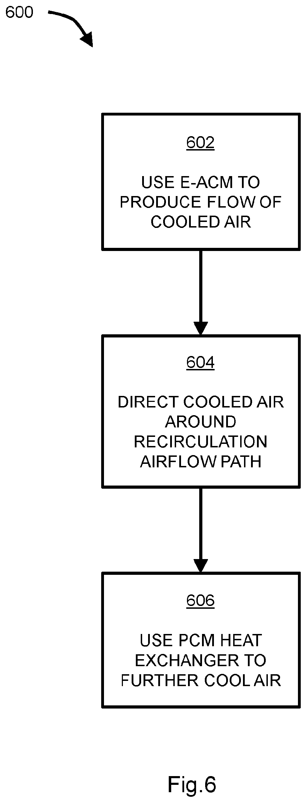

Referring now to Fig. 6, a flowchart is illustrated showing a method of supplying cooled air in a vehicle, according to an embodiment of the invention. The method corresponds to a method of operating any of the systems described above with reference to Figs. 1 to 5. First, in step 602 an ACM is used to produce a flow of cooled air. Then, in step 604 the cooled air is directed from the air expansion stage of the ACM around an airflow path from the ACM to one or more parts of the vehicle. In step 606, a PCM heat exchanger is used to further cool the air prior to said air reaching at least one part of the vehicle among said one or more parts, in addition to cooling provided by the ACM. It will be appreciated that since the ACM can operate continually, in practice steps 602, 604 and 606 may be performed concurrently on different parts of the airflow within the system.

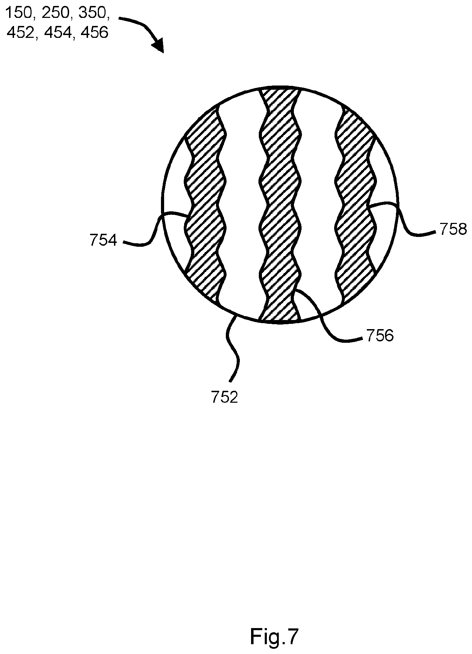

Referring now to Fig. 7, a cross-sectional view of a PCM heat exchanger is illustrated, according to an embodiment of the invention. The PCM heat exchanger illustrated in Fig. 7 may be used as the PCM heat exchangers 150, 250, 350, 452, 454, 456 in any of the above-described embodiments. In the present embodiment, the PCM heat exchanger is constructed in a similar manner to a plate fin heat exchanger, comprising a housing 752 through which air can flow from one end of the PCM heat exchanger to the other, and a plurality of plates disposed within the housing 752. The housing 752 can be configured to be connected at either end to the airflow path 120, 220, 320, 420. For example, the housing 752 may be constructed to have a similar size and shape as ducting used in the airflow path 120, 220, 320, 420, allowing the PCM heat exchanger 150, 250, 350, 452, 454, 456 to easily be installed inline with the airflow path 120, 220, 320, 420. It should be appreciated that although a housing with a circular cross-section is shown in Fig. 7, in other embodiments the housing may have any shape in cross-section, for example a square or rectangular cross-section.

The plurality of plates divide the space within the housing 752 into one or more airflow sections and one or more phase change material sections 754, 756, 758, each phase change material section 754, 756, 758 containing an amount of phase change material. In the embodiment shown in Fig. 7, cross-hatching is used to illustrate the phase change material sections 754, 756, 758, while the spaces between the phase change material sections 754, 756, 758 comprise the airflow sections through which air can pass.

The plurality of plates may be non-planar, for example having a corrugated form as shown in Fig. 7, and/or surface features such as fins or other protrusions, so as to increase the surface area in contact with air flowing through the airflow sections. In this way, the efficiency of heat transfer from the air to the phase change material can be increased.

It should be appreciated that the PCM heat exchanger illustrated in Fig. 7 is merely one example of a manger in which the PCM heat exchanger 150, 250, 350, 452, 454, 456 may be implemented, and in other embodiments the PCM heat exchanger 150, 250, 350, 452, 454, 456 may be configured differently to the one shown in Fig. 7. For example, in some embodiments the phase change material may be provided in the form of a partial or complete layer disposed around the outside of the housing, such that the phase change material forms a partial or complete annulus around the housing when viewed in cross-section.

Whilst certain embodiments of the invention have been described herein with reference to the drawings, it will be understood that many variations and modifications will be possible without departing from the scope of the invention as defined in the accompanying claims.

## Claims

1. A system (100; 200; 300; 400) for supplying cooled air in a vehicle, the system comprising:
an air cycle machine, ACM (110; 210; 310; 410), comprising an air compression stage (112; 212; 312; 412) arranged to receive and compress a flow of air so as to produce a flow of compressed air, a heat exchange stage (114; 214; 314; 414) arranged to cool said compressed air, and an air expansion stage (116; 216; 316; 416) arranged to expand air received from the heat exchange stage so as to output a flow of cooled air having a temperature lower than a temperature of the air received by the air compression stage;
an airflow path (120; 220; 320; 420) configured to direct the cooled air from the ACM to one or more parts of the vehicle; and
a phase change material, PCM, heat exchanger (150; 250; 350; 452, 454, 456) arranged to further cool the air prior to said air reaching at least one part of the vehicle among said one or more parts, in addition to cooling provided by the ACM;
**characterized by**
a controller (160; 260; 360; 460) configured to control an extent to which the PCM heat exchanger further lowers the temperature of the cooled air in dependence on a load on the system.

2. The system according to claim 1, comprising:
a first bypass flow path (522) configured to permit at least a portion of air flowing along the airflow path to bypass the PCM heat exchanger; and
a flow control mechanism (524) operable to control a flow rate of air along the first bypass flow path relative to a flow rate of air passing through the PCM heat exchanger,
wherein the controller is configured to control the flow control mechanism in dependence on the load on the system, so as to control the extent to which the PCM heat exchanger further lowers the temperature of the cooled air prior to said air reaching the at least one part of the vehicle.

3. The system according to claim 1 or claim 2, wherein the controller is configured to receive first temperature information indicative of a first temperature of said air at a first point along the airflow path upstream of the at least one part of the vehicle, and second temperature information indicative of a second temperature of said air at a second point along the airflow path downstream of the at least one part of the vehicle, such that a difference between the first and second temperatures is indicative of a load on the system associated with the at least one part of the vehicle,
wherein the controller is configured to control the extent to which the PCM heat exchanger further lowers the temperature of the cooled air in dependence on the first temperature information and the second temperature information.

4. The system according to claim 3, wherein the one or more parts of the vehicle comprise at least a first part and a second part, the airflow path being configured such that the cooled air passes from the ACM to the second part via the first part,
wherein the first point along the airflow path is a point upstream of the first part, the second point along the airflow path is a point downstream of the second part, the controller being configured to receive third temperature information indicative of a third temperature of said air at a third point along the airflow path between the first and second parts, such that a difference between the first and third temperatures is indicative of a load on the system associated with the first part of the vehicle and a difference between the second and third temperatures is indicative of a load on the system associated with the second part of the vehicle,
wherein the controller is configured to control the extent to which the PCM heat exchanger further lowers the temperature of the cooled air in dependence on the third temperature information in addition to the first temperature information and the second temperature information.

5. The system according to claim 4, wherein the controller is configured to determine a first load associated with the first part of the vehicle based on the first and third temperature information, determine a second load associated with the second part of the vehicle based on the second and third temperature information, and determine the load on the system based on the determined first and second loads.

6. The system according to claim 3, wherein the one or more parts of the vehicle comprise at least a first part and a second part, the airflow path being configured such that the cooled air passes from the ACM to the second part via the first part, and
wherein the first point along the airflow path is a point upstream of the first part, such that a difference between the first and second temperatures is indicative of a total load on the system associated with both the first and second parts of the vehicle.

7. The system according to any one of claims 1 to 6, wherein the one or more parts of the vehicle comprise one or more electronic components, the controller is configured to receive electrical power information indicative of a level of electrical power presently being supplied to the one or more electronic components, and is configured to control the extent to which the PCM heat exchanger further lowers the temperature of the cooled air in dependence on the received electrical power information.

8. The system according to any one of claims 1 to 7, wherein the controller is configured to increase a rate of airflow through the PCM heat exchanger to cool a phase change material of the PCM heat exchanger.

9. The system according to any one of claims 1 to 8, wherein the one or more parts of the vehicle comprise at least a first part (130; 230; 330; 430) and a second part (140; 240; 340; 440), the airflow path being configured such that the cooled air passes from the ACM to the second part via the first part, the PCM heat exchanger comprising:
a first PCM heat exchanger (150; 452) disposed along the airflow path between the first part and the second part, so as to cool air received from the first part before it reaches the second part; or
a second PCM heat exchanger (250; 454) disposed along the airflow path between the ACM and the first part, so as to further cool the flow of cooled air from the ACM before it reaches the first part; or
a third PCM heat exchanger (350; 456) connected between the air compression stage of the ACM and the air expansion stage of the ACM so as to further cool the flow of compressed air before it reaches the air expansion stage,
wherein the system further comprises at least one other of said first, second and third heat exchangers.

10. The system according to any one of the preceding claims, wherein the one or more parts of the vehicle comprise at least a first part and a second part, the airflow path being configured such that the cooled air passes from the ACM to the second part via the first part, the system comprising:
a second bypass flow path (122; 222; 322; 422) configured to permit at least a portion of the cooled air from the ACM to bypass the first part, such that the at least a portion of cooled air can flow from the ACM to the second part without passing through the first part.

11. The system according to any one of the preceding claims, wherein the airflow path is a recirculation airflow path configured to direct air from the one or more parts of the vehicle back to the air compression stage of the ACM, so as to recirculate air within the vehicle.

12. The system according to any one of the preceding claims, wherein the air cycle machine is an electric air cycle machine, E-ACM.

13. A vehicle comprising the system according to any one of the preceding claims.

14. The vehicle according to claim 13, wherein the vehicle is an aircraft and the one or more parts of the vehicle comprise at least:
a cockpit (130; 230; 330; 430); and
one or more avionics compartments (140; 240; 340; 440) housing one or more avionics components.

15. A method of supplying cooled air in a vehicle, the method comprising:
using (602) an air cycle machine, ACM (110; 210; 310; 410), to produce a flow of cooled air, the ACM comprising an air compression stage (112; 212; 312; 412) arranged to compress air so as to produce a flow of compressed air, a heat exchange stage (114; 214; 314; 414) arranged to cool said compressed air, and an air expansion stage (116; 216; 316; 416) arranged to expand air received from the heat exchange stage so as to output the flow of cooled air having a temperature lower than a temperature of the air received by the air compression stage;
directing (604) the cooled air from the air expansion stage of the ACM around an airflow path (120; 220; 320; 420) from the ACM to one or more parts of the vehicle; and
using (606) a phase change material, PCM, heat exchanger (150; 250; 350; 452, 454, 456) to further cool the air prior to said air reaching at least one part of the vehicle among said one or more parts, in addition to cooling provided by the ACM;
**characterized by**
using a controller (160; 260; 360; 460) to control an extent to which the PCM heat exchanger further lowers the temperature of the cooled air in dependence on a load on the system.

## Patentansprüche

1. System (100; 200; 300; 400) zum Zuführen von gekühlter Luft in einem Fahrzeug, das System umfassend:
eine Luftkreislaufmaschine, ACM (110; 210; 310; 410), umfassend eine Luftverdichtungsstufe (112; 212; 312; 412), die angeordnet ist, um eine Strömung von Luft zu empfangen und zu verdichten, um eine Strömung von Druckluft zu erzeugen, eine Wärmeaustauschstufe (114; 214; 314; 414), die angeordnet ist, um die Druckluft zu kühlen, und eine Luftexpansionsstufe (116; 216; 316; 416), die angeordnet ist, um von der Wärmeaustauschstufe empfangene Luft zu expandieren, um eine Strömung von gekühlter Luft auszugeben, die eine Temperatur aufweist, die niedriger als eine Temperatur der Luft ist, die durch die Luftverdichtungsstufe empfangen wird;
einen Luftströmungsweg (120; 220; 320; 420), der konfiguriert ist, um die gekühlte Luft von der ACM zu einem oder mehreren Teilen des Fahrzeugs zu leiten; und
ein Phasenwechselmaterial-Wärmetauscher, PCM-Wärmetauscher, (150; 250; 350; 452, 454, 456), der angeordnet ist, um die Luft weiter zu kühlen, bevor die Luft mindestens einen Teil des Fahrzeugs unter dem einen oder den mehreren Teilen erreicht, zusätzlich zu dem Kühlen, das durch die ACM bereitgestellt ist;
**gekennzeichnet durch**
eine Steuerung (160; 260; 360; 460), die konfiguriert ist, um ein Ausmaß zu steuern, in dem der PCM-Wärmetauscher die Temperatur der gekühlten Luft in Abhängigkeit von einer Last auf dem System weiter senkt.

2. System nach Anspruch 1, umfassend:
einen ersten Umgehungsströmungsweg (522), der konfiguriert ist, um mindestens einem Anteil von Luft, die entlang des Luftströmungswegs strömt, zu ermöglichen, den PCM-Wärmetauscher zu umgehen; und
einen Strömungssteuerungsmechanismus (524), der betreibbar ist, um eine Strömungsgeschwindigkeit von Luft entlang des ersten Umgehungsströmungswegs relativ zu einer Strömungsgeschwindigkeit von Luft zu steuern, die durch den PCM-Wärmetauscher passiert,
wobei die Steuerung konfiguriert ist, um den Strömungssteuerungsmechanismus in Abhängigkeit von der Last auf dem System zu steuern, um das Ausmaß zu steuern, in dem der PCM-Wärmetauscher die Temperatur der gekühlten Luft weiter senkt, bevor die Luft den mindestens einen Teil des Fahrzeugs erreicht.

3. System nach Anspruch 1 oder 2, wobei die Steuerung derart konfiguriert ist, um erste Temperaturinformationen, die eine erste Temperatur der Luft an einem ersten Punkt entlang des Luftströmungswegs stromaufwärts des mindestens einen Teils des Fahrzeugs anzeigen, und zweite Temperaturinformationen zu empfangen, die eine zweite Temperatur der Luft an einem zweiten Punkt entlang des Luftströmungswegs stromabwärts des mindestens einen Teils des Fahrzeugs anzeigen, dass eine Differenz zwischen der ersten und der zweiten Temperatur eine Last auf dem System anzeigt, die dem mindestens einen Teil des Fahrzeugs zugeordnet ist,
wobei die Steuerung konfiguriert ist, um das Ausmaß zu steuern, in dem der PCM-Wärmetauscher die Temperatur der gekühlten Luft weiter senkt, in Abhängigkeit von den ersten Temperaturinformationen und den zweiten Temperaturinformationen.

4. System nach Anspruch 3, wobei der eine oder die mehreren Teile des Fahrzeugs mindestens einen ersten Teil und einen zweiten Teil umfassen, wobei der Luftströmungsweg derart konfiguriert ist, dass die gekühlte Luft von der ACM zu dem zweiten Teil über den ersten Teil passiert,
wobei der erste Punkt entlang des Luftströmungswegs ein Punkt stromaufwärts des ersten Teils ist, der zweite Punkt entlang des Luftströmungswegs ein Punkt stromabwärts des zweiten Teils ist, wobei die Steuerung derart konfiguriert ist, um dritte Temperaturinformationen zu empfangen, die eine dritte Temperatur der Luft an einem dritten Punkt entlang des Luftströmungswegs zwischen dem ersten und dem zweiten Teil anzeigen, dass eine Differenz zwischen der ersten und der dritten Temperatur eine Last auf dem System anzeigt, die dem ersten Teil des Fahrzeugs zugeordnet ist, und eine Differenz zwischen der zweiten und der dritten Temperatur eine Last auf dem System anzeigt, die dem zweiten Teil des Fahrzeugs zugeordnet ist,
wobei die Steuerung konfiguriert ist, um das Ausmaß zu steuern, in dem der PCM-Wärmetauscher die Temperatur der gekühlten Luft weiter senkt, in Abhängigkeit von den dritten Temperaturinformationen zusätzlich zu den ersten Temperaturinformationen und den zweiten Temperaturinformationen.

5. System nach Anspruch 4, wobei die Steuerung konfiguriert ist, um eine erste Last zu bestimmen, die dem ersten Teil des Fahrzeugs basierend auf den ersten und den dritten Temperaturinformationen zugeordnet ist, eine zweite Last zu bestimmen, die dem zweiten Teil des Fahrzeugs basierend auf den zweiten und den dritten Temperaturinformationen zugeordnet ist, und die Last auf dem System basierend auf den bestimmten ersten und zweiten Lasten zu bestimmen.

6. System nach Anspruch 3, wobei der eine oder die mehreren Teile des Fahrzeugs mindestens einen ersten Teil und einen zweiten Teil umfassen, wobei der Luftströmungsweg derart konfiguriert ist, dass die gekühlte Luft von der ACM zu dem zweiten Teil über den ersten Teil passiert, und
wobei der erste Punkt entlang des Luftströmungswegs derart ein Punkt stromaufwärts des ersten Teils ist, dass eine Differenz zwischen der ersten und der zweiten Temperatur eine Gesamtlast auf dem System anzeigt, die sowohl dem ersten als auch dem zweiten Teil des Fahrzeugs zugeorndet ist.

7. System nach einem der Ansprüche 1 bis 6, wobei der eine oder die mehreren Teile des Fahrzeugs eine oder mehrere elektronische Komponenten umfassen, die Steuerung konfiguriert ist, um elektrische Leistungsinformationen zu empfangen, die einen Pegel von elektrischer Leistung anzeigen, der gegenwärtig an die eine oder die mehreren elektronischen Komponenten zugeführt wird, und konfiguriert ist, um das Ausmaß zu steuern, in dem der PCM-Wärmetauscher die Temperatur der gekühlten Luft weiter senkt, in Abhängigkeit von den empfangenen elektrischen Leistungsinformationen.

8. System nach einem der Ansprüche 1 bis 7, wobei die Steuerung konfiguriert ist, um eine Geschwindigkeit der Luftströmung durch den PCM-Wärmetauscher zu erhöhen, um ein Phasenwechselmaterial des PCM-Wärmetauschers zu kühlen.

9. System nach einem der Ansprüche 1 bis 8, wobei der eine oder die mehreren Teile des Fahrzeugs mindestens einen ersten Teil (130; 230; 330; 430) und einen zweiten Teil (140; 240; 340; 440) umfassen, wobei der Luftströmungsweg derart konfiguriert ist, dass die gekühlte Luft von der ACM zu dem zweiten Teil über den ersten Teil passiert, wobei der PCM-Wärmetauscher umfasst:
einen ersten PCM-Wärmetauscher (150; 452), der entlang des Luftströmungswegs zwischen dem ersten Teil und dem zweiten Teil eingerichtet ist, um von dem ersten Teil empfangene Luft zu kühlen, bevor sie den zweiten Teil erreicht; oder
einen zweiten PCM-Wärmetauscher (250; 454), der entlang des Luftströmungswegs zwischen der ACM und dem ersten Teil eingerichtet ist, um die Strömung von gekühlter Luft von der ACM weiter zu kühlen, bevor sie den ersten Teil erreicht; oder
einen dritten PCM-Wärmetauscher (350; 456), der zwischen der Luftverdichtungsstufe der ACM und der Luftexpansionsstufe der ACM verbunden ist, um die Strömung von Druckluft weiter zu kühlen, bevor sie die Luftexpansionsstufe erreicht,
wobei das System ferner mindestens einen weiteren des ersten, des zweiten und des dritten Wärmetauschers umfasst.

10. System nach einem der vorstehenden Ansprüche, wobei der eine oder die mehreren Teile des Fahrzeugs mindestens einen ersten Teil und einen zweiten Teil umfassen, wobei der Luftströmungsweg derart konfiguriert ist, dass die gekühlte Luft von der ACM zu dem zweiten Teil über den ersten Teil passiert, das System umfassend:
einen zweiten Umgehungsströmungsweg (122; 222; 322; 422), der konfiguriert ist, um mindestens einem Anteil der gekühlten Luft aus der ACM zu ermöglichen, den ersten Teil derart zu umgehen, dass der mindestens eine Anteil von gekühlter Luft von der ACM zu dem zweiten Teil strömen kann, ohne durch den ersten Teil zu passieren.

11. System nach einem der vorstehenden Ansprüche, wobei der Luftströmungsweg ein Umwälzluftströmungsweg ist, der konfiguriert ist, um Luft von dem einen oder den mehreren Teilen des Fahrzeugs zurück zu der Luftverdichtungsstufe der ACM zu leiten, um Luft innerhalb des Fahrzeugs umzuwälzen.

12. System nach einem der vorstehenden Ansprüche, wobei die Luftkreislaufmaschine eine elektrische Luftkreislaufmaschine, E-ACM, ist.

13. Fahrzeug, umfassend das System nach einem der vorstehenden Ansprüche.

14. Fahrzeug nach Anspruch 13, wobei das Fahrzeug ein Luftfahrzeug ist und der eine oder die mehreren Teile des Fahrzeugs mindestens umfassen:
ein Cockpit (130; 230; 330; 430); und
ein oder mehrere Luftfahrtelektronikabteile (140; 240; 340; 440), die eine oder mehrere Luftfahrtelektronikkomponenten aufnehmen.

15. Verfahren zum Zuführen von gekühlter Luft in ein Fahrzeug, das Verfahren umfassend:
Verwenden (602) einer Luftkreislaufmaschine, ACM (110; 210; 310; 410), um eine Strömung von gekühlter Luft zu erzeugen, die ACM umfassend eine Luftverdichtungsstufe (112; 212; 312; 412), die angeordnet ist, um Luft zu verdichten, um eine Strömung von Druckluft zu erzeugen, eine Wärmeaustauschstufe (114; 214; 314; 414), die angeordnet ist, um die Druckluft zu kühlen, und eine Luftexpansionsstufe (116; 216; 316; 416), die angeordnet ist, um von der Wärmeaustauschstufe empfangene Luft zu expandieren, um die Strömung von gekühlter Luft auszugeben, die eine Temperatur aufweist, die niedriger als eine Temperatur der Luft ist, die durch die Luftverdichtungsstufe empfangen wird;
Leiten (604) der gekühlten Luft von der Luftexpansionsstufe der ACM um einen Luftströmungsweg (120; 220; 320; 420) herum von der ACM zu einem oder mehreren Teilen des Fahrzeugs; und
Verwenden (606) eines Phasenwechselmaterial-Wärmetauschers, PCM-Wärmetauschers, (150; 250; 350; 452, 454, 456), um die Luft weiter zu kühlen, bevor die Luft mindestens einen Teil des Fahrzeugs unter dem einen oder den mehreren Teilen erreicht, zusätzlich zu dem Kühlen, das durch die ACM bereitgestellt ist;
**gekennzeichnet durch**
das Verwenden einer Steuerung (160; 260; 360; 460), um ein Ausmaß zu steuern, in dem der PCM-Wärmetauscher die Temperatur der gekühlten Luft in Abhängigkeit von einer Last auf dem System weiter senkt.

## Revendications

1. Système (100 ; 200 ; 300 ; 400) d'alimentation en air refroidi dans un véhicule, le système comprenant :
un groupe turbo-refroidisseur, ACM (110 ; 210 ; 310 ; 410), comprenant un étage de compression d'air (112 ; 212 ; 312 ; 412) disposé pour recevoir et comprimer un écoulement d'air afin de produire un écoulement d'air comprimé, un étage d'échange de chaleur (114 ; 214 ; 314 ; 414) disposé pour refroidir ledit air comprimé, et un étage de dilatation d'air (116 ; 216 ; 316 ; 416) disposé pour dilater de l'air reçu à partir de l'étage d'échange de chaleur afin de délivrer en sortie un écoulement d'air refroidi ayant une température inférieure à une température de l'air reçu par l'étage de compression d'air ;
un trajet d'écoulement d'air (120 ; 220 ; 320 ; 420) configuré pour diriger l'air refroidi à partir de l'ACM vers une ou plusieurs parties du véhicule ; et
un échangeur de chaleur de matériau à changement de phase, PCM (150 ; 250 ; 350 ; 452, 454, 456) disposé pour refroidir davantage l'air avant que ledit air n'atteigne au moins une partie du véhicule parmi ladite ou lesdites parties, en plus du refroidissement assuré par l'ACM ;
**caractérisé par**
un dispositif de commande (160 ; 260 ; 360 ; 460) configuré pour commander la mesure dans laquelle l'échangeur de chaleur PCM abaisse davantage la température de l'air refroidi en fonction d'une charge sur le système.

2. Système selon la revendication 1, comprenant :
un premier trajet d'écoulement de dérivation (522) configurée pour permettre à au moins une partie d'air s'écoulant le long du trajet d'écoulement d'air de contourner l'échangeur de chaleur PCM ; et
un mécanisme de commande d'écoulement (524) servant à commander un débit d'air le long du premier trajet d'écoulement de dérivation par rapport à un débit d'air passant à travers l'échangeur de chaleur PCM,
dans lequel le dispositif de commande est configuré pour commander le mécanisme de commande d'écoulement en fonction de la charge sur le système, afin de commander la mesure dans laquelle l'échangeur de chaleur PCM abaisse davantage la température de l'air refroidi avant que ledit air n'atteigne l'au moins une partie du véhicule.

3. Système selon la revendication 1 ou la revendication 2, dans lequel le dispositif de commande est configuré pour recevoir des premières informations de température indicatives d'une première température dudit air au niveau d'un premier point le long du trajet d'écoulement d'air en amont de l'au moins une partie du véhicule, et des deuxièmes informations de température indicatives d'une deuxième température dudit air au niveau d'un deuxième point le long du trajet d'écoulement d'air en aval de l'au moins une partie du véhicule, de telle sorte qu'une différence entre les première et deuxième températures soit indicative d'une charge sur le système associée à l'au moins une partie du véhicule,
dans lequel le dispositif de commande est configuré pour commander la mesure dans laquelle l'échangeur de chaleur PCM abaisse davantage la température de l'air refroidi en fonction des premières informations de température et des deuxièmes informations de température.

4. Système selon la revendication 3, dans lequel la ou les parties du véhicule comprennent au moins une première partie et une seconde partie, le trajet d'écoulement d'air étant configuré de telle sorte que l'air refroidi passe à partir de l'ACM vers la seconde partie par l'intermédiaire de la première partie,
dans lequel le premier point le long du trajet d'écoulement d'air est un point en amont de la première partie, le deuxième point le long du trajet d'écoulement d'air est un point en aval de la seconde partie, le dispositif de commande étant configuré pour recevoir des troisièmes informations de température indicatives d'une troisième température dudit air au niveau d'un troisième point le long du trajet d'écoulement d'air entre les première et seconde parties, de telle sorte qu'une différence entre les première et troisième températures soit indicative d'une charge sur le système associée à la première partie du véhicule et qu'une différence entre les deuxième et troisième températures soit indicative d'une charge sur le système associé à la seconde partie du véhicule,
dans lequel le dispositif de commande est configuré pour commander la mesure dans laquelle l'échangeur de chaleur PCM abaisse davantage la température de l'air refroidi en fonction des troisièmes informations de température en plus des premières informations de température et des deuxièmes informations de température.

5. Système selon la revendication 4, dans lequel le dispositif de commande est configuré pour déterminer une première charge associée à la première partie du véhicule sur la base des premières et troisièmes informations de température, déterminer une seconde charge associée à la seconde partie du véhicule sur la base des secondes et troisièmes informations de température, et déterminer la charge sur le système sur la base des première et seconde charges déterminées.

6. Système selon la revendication 3, dans lequel la ou les parties du véhicule comprennent au moins une première partie et une seconde partie, le trajet d'écoulement d'air étant configuré de telle sorte que l'air refroidi passe à partir de l'ACM vers la seconde partie par l'intermédiaire de la première partie, et
dans lequel le premier point le long du trajet d'écoulement d'air est un point en amont de la première partie, de telle sorte qu'une différence entre les première et deuxième températures soit indicative d'une charge totale sur le système associée à la fois aux première et seconde parties du véhicule.

7. Système selon l'une quelconque des revendications 1 à 6, dans lequel la ou les parties du véhicule comprennent un ou plusieurs composants électroniques, le dispositif de commande est configuré pour recevoir des informations de puissance électrique indicatives d'un niveau de puissance électrique qui est actuellement fourni au ou aux composants électroniques, et est configuré pour commander la mesure dans laquelle l'échangeur de chaleur PCM abaisse davantage la température de l'air refroidi en fonction des informations de puissance électrique reçues.

8. Système selon l'une quelconque des revendications 1 à 7, dans lequel le dispositif de commande est configuré pour augmenter un débit d'écoulement d'air à travers l'échangeur de chaleur PCM afin de refroidir un matériau à changement de phase de l'échangeur de chaleur PCM.

9. Système selon l'une quelconque des revendications 1 à 8, dans lequel la ou les parties du véhicule comprennent au moins une première partie (130 ; 230 ; 330 ; 430) et une seconde partie (140 ; 240 ; 340 ; 440), le trajet d'écoulement d'air étant configuré de telle sorte que l'air refroidi passe à partir de l'ACM vers la seconde partie par l'intermédiaire de la première partie, l'échangeur de chaleur PCM comprenant :
un premier échangeur de chaleur PCM (150 ; 452) disposé le long du trajet d'écoulement d'air entre la première partie et la seconde partie, afin de refroidir de l'air reçu à partir de la première partie avant qu'il n'atteigne la seconde partie ; ou
un deuxième échangeur de chaleur PCM (250 ; 454) disposé le long du trajet d'écoulement d'air entre l'ACM et la première partie, afin de refroidir davantage l'écoulement d'air refroidi à partir de l'ACM avant qu'il n'atteigne la première partie ; ou
un troisième échangeur de chaleur PCM (350 ; 456) relié entre l'étage de compression d'air de l'ACM et l'étage de dilatation d'air de l'ACM afin de refroidir davantage l'écoulement d'air comprimé avant qu'il n'atteigne l'étage de dilatation d'air,
dans lequel le système comprend en outre au moins l'un autre parmi lesdits premier, deuxième et troisième échangeurs de chaleur.

10. Système selon l'une quelconque des revendications précédentes, dans lequel la ou les parties du véhicule comprennent au moins une première partie et une seconde partie, le trajet d'écoulement d'air étant configuré de telle sorte que l'air refroidi passe à partir de l'ACM vers la seconde partie par l'intermédiaire de la première partie, le système comprenant :
un second trajet d'écoulement de dérivation (122 ; 222 ; 322 ; 422) configurée pour permettre à au moins une partie de l'air refroidi à partir de l'ACM de contourner la première partie, de telle sorte qu'au moins une partie d'air refroidi puisse s'écouler à partir de l'ACM vers la seconde partie sans passer à travers la première partie.

11. Système selon l'une quelconque des revendications précédentes, dans lequel le trajet d'écoulement d'air est un trajet d'écoulement d'air de recirculation configurée pour renvoyer de l'air à partir de la ou des parties du véhicule à l'étage de compression d'air de l'ACM, afin de faire recirculer de l'air à l'intérieur du véhicule.

12. Système selon l'une quelconque des revendications précédentes, dans lequel le groupe turbo-refroidisseur est un groupe turbo-refroidisseur électrique, E-ACM.

13. Véhicule comprenant le système selon l'une quelconque des revendications précédentes.

14. Véhicule selon la revendication 13, dans lequel le véhicule est un aéronef et la ou les parties du véhicule comprennent au moins :
un poste de pilotage (130 ; 230 ; 330 ; 430) ; et
un ou plusieurs compartiments avioniques (140 ; 240 ; 340 ; 440) logeant un ou plusieurs composants avioniques.

15. Procédé d'alimentation en air refroidi dans un véhicule, le procédé comprenant :
l'utilisation (602) d'un groupe turbo-refroidisseur, ACM (110 ; 210 ; 310 ; 410), pour produire un écoulement d'air refroidi, l'ACM comprenant un étage de compression d'air (112 ; 212 ; 312 ; 412) disposé pour comprimer de l'air afin de produire un écoulement d'air comprimé, un étage d'échange de chaleur (114 ; 214 ; 314 ; 414) disposé pour refroidir ledit air comprimé, et un étage de dilatation d'air (116 ; 216 ; 316 ; 416) disposé pour dilater de l'air reçu à partir de l'étage d'échange de chaleur afin de délivrer en sortie l'écoulement d'air refroidi ayant une température inférieure à une température de l'air reçu par l'étage de compression d'air ;
la direction (604) de l'air refroidi à partir de l'étage de dilatation d'air de l'ACM autour d'un trajet d'écoulement d'air (120 ; 220 ; 320 ; 420) à partir de l'ACM vers une ou plusieurs parties du véhicule ; et
l'utilisation (606) d'un échangeur de chaleur de matériau à changement de phase, PCM (150 ; 250 ; 350 ; 452, 454, 456) pour refroidir davantage l'air avant que ledit air n'atteigne au moins une partie du véhicule parmi ladite ou lesdites parties, en plus du refroidissement assuré par l'ACM ;
**caractérisé par**
l'utilisation d'un dispositif de commande (160 ; 260 ; 360 ; 460) pour commander la mesure dans laquelle l'échangeur de chaleur PCM abaisse davantage la température de l'air refroidi en fonction d'une charge sur le système.
